(19) Europäisches Patentamt

European Patent Office

Office européen des brevets

(11) EP 0 883 569 B1

(12) EUROPEAN PATENT SPECIFICATION

(45) Date of publication and mention
of the grant of the patent:
**20.11.2002 Bulletin 2002/47**

(51) Int Cl.[7]: $C01B\ 3/16$, C01B 3/26

(86) International application number:
**PCT/US96/02651**

(21) Application number: **96907899.7**

(22) Date of filing: **27.02.1996**

(87) International publication number:
**WO 97/031858 (04.09.1997 Gazette 1997/38)**

(54) **METHOD FOR HOT GAS CONDITIONING**

VERFAHREN ZUR KONIDITIONIERUNG VON HEISSEN GASEN

PROCEDE DE CONDITIONNEMENT DE GAZ CHAUDS

(84) Designated Contracting States:
**AT BE CH DE DK ES FR GB GR IE IT LI LU MC NL
PT SE**

(43) Date of publication of application:
**16.12.1998 Bulletin 1998/51**

(73) Proprietor: **Future Energy Resources
Corporation
Norcross, Georgia 30092 (US)**

(72) Inventor: **PAISLEY, Mark, A.
Upper Alrington, OH 43221 (US)**

(74) Representative:
**Sulzbach, Werner, Dipl.-Chem. Dr.
Prinz & Partner GbR
Manzingerweg 7
81241 München (DE)**

(56) References cited:
**US-A- 4 888 131         US-A- 5 177 303
US-A- 5 494 653**

**Description**

FIELD OF THE INVENTION

The invention includes a method of using an alumina catalyst for shifting and cracking an input gas to provide a feed gas suitable for hydrocarbon synthesis (e.g. methanol synthesis). The method allows the reaction with minimum or substantially no carbonization and with higher yields than heretofore possible. Further, the method does not require the use of metals such as nickel or molybdenum that are hazardous to the environment.

BACKGROUND OF THE INVENTION

The production of a feed gas for hydrogen synthesis using gasification requires the use of a catalyst to adjust the hydrogen to carbon monoxide ratio by the water gas shift reaction,

$$CO + H_2O \rightarrow CO_2 + H_2$$

and, if alcohols are the desired product, to crack hydrocarbons to a mixture of hydrogen and carbon monoxide, by the reaction,

$$C_nH_m + (n/2)O_2 \rightarrow nCO + (m/2)H_2$$

Both of these reactions must be done in such a way as to not promote the formation of carbon, an undesired byproduct. Conventional catalyst systems and methods for these reactions require the use of noble metals such as nickel, molybdenum, and the like, or of alkali materials such as potassium, sodium, and the like. Further, conventional catalyst systems and methods do not suppress carbon to the desired extent. Typical of these and other gas production operations are the following U.S. patents 233,861 to Jerzmanowski; 1,295,825 to Ellis; 1,875,923 to Harrison; 1,903,845 to Wilcox; 1,977,684 to Lucke; 1,992,909 to Davis; 2,405,395 to Bahlke et al; 2,546,606; 3,922,337 to Campbell et al; 4,726,913 to Brophy et al; 4,888,131 to Goetsch et al; 5,143,647 to Say et al; and British patent GB 461,402 (Feb. 16, 1937).

SUMMARY OF THE INVENTION

The first embodiment of the invention includes a method for cracking and shifting a synthesis gas by providing a catalyst consisting essentially of alumina; and contacting the catalyst with the synthesis gas comprising a substantially oxygen free mixture of gases of water vapor and hydrocarbons having one or more carbon atoms, at a temperature between 530°C (1000°F) to 980°C (1800°F); wherein the hydrocarbons are cracked to form hydrogen, carbon monoxide and/or carbon dioxide and the hydrogen content of the mixture shifted so as to increase with a corresponding decrease in carbon monoxide.
In particular, the method includes cracking and shifting a synthesis gas by providing a catalyst consisting essentially of alumina; contacting the alumina catalyst with a substantially oxygen free synthesis gas of: methane and/ or higher hydrocarbons; and water vapor; at a temperature of about 530°C to about 980°C, wherein methane and higher hydrocarbons are cracked according to the reaction,

$$C_xH_{2y} + xH_2O = xCO + (1+y+x)H_2,$$

and shifted by the reaction,

$$CO + H_2O = CO_2 + H_2,$$

and wherein carbon formation is substantially eliminated.
A yet further embodiment of the invention includes a method for cracking and shifting a substantially oxygen free synthesis gas comprising: (a) providing a reaction zone with a catalyst consisting essentially of alumina; (b) flowing the synthesis gas into the reaction zone and contacting the catalyst; (c) simultaneously with step b, flowing up to about 80 volume percent water vapor into contact with the catalyst: at a temperature of about 530°C to about 980°C, wherein methane and higher hydrocarbons in the synthesis gas are cracked according to the reaction.

$$C_xH_{2y} + xH_2O = xCO + (1+y+x)H_2,$$

and shifted by the reaction,

$$CO + H_2O = CO_2 + H_2,$$

and wherein carbon formation is substantially eliminated.

The above embodiments can provide that the contacting is carried out in a fluidized bed reactor, or in a recirculating fluidized bed gasifier, or in a fixed bed reactor.

A further embodiment of the invention includes a method for cracking and shifting a synthesis gas comprising: (a) providing a catalyst consisting essentially of granulated alumina; (b) contacting the catalyst with the synthesis gas comprising a substantially oxygen free mixture of gases of water vapor and hydrocarbons having one or more carbon atoms, at a temperature between about 530°C (1000°F) to about 980°C (1800°F); (d) circulating the catalyst between a gasifier where the contacting is accomplished, and a combustor where the catalyst is heated to maintain the temperatures when the catalyst is recirculated to the gasifier; and wherein the hydrocarbons are cracked to form hydrogen, carbon monoxide and/or carbon dioxide and the hydrogen content of the mixture increases with a corresponding decrease in carbon monoxide, and wherein carbon formation is substantially eliminated.

The above embodiments can provide that the substantially oxygen free mixture of gases also contains carbon monoxide and/or hydrogen. They can have a gaseous hourly space velocity greater than about 1000 $m^3/m^3 \cdot hr$ that can go up to about 5000 $m^3/m^3 \cdot hr$, and can complete the cracking and shifting reactions in one reaction zone. The temperature is preferably between about 650°C to about 870°C.

The invention also provides for new uses for alumina. A composition consisting essentially of alumina is able to be used in catalytic reactions where only combinations of materials often hazardous to dispose of have been used. The new use in catalytic reactions provides results equal to or better than the previous materials without the attendant disposal problems.

BRIEF DESCRIPTION OF THE DRAWINGS

Figure 1 illustrates the gasifier and reactor arrangement used for the examples herein.
Figure 2 illustrates a typical reactor for the method of the invention.
Figure 3 is a graphical representation of the data from Table II plotted to show the $H_2/CO$ ratio in the Y-axis versus the inlet steam concentration in volume percent in the X-axis.

DETAILED DESCRIPTION OF THE INVENTION AND BEST MODE

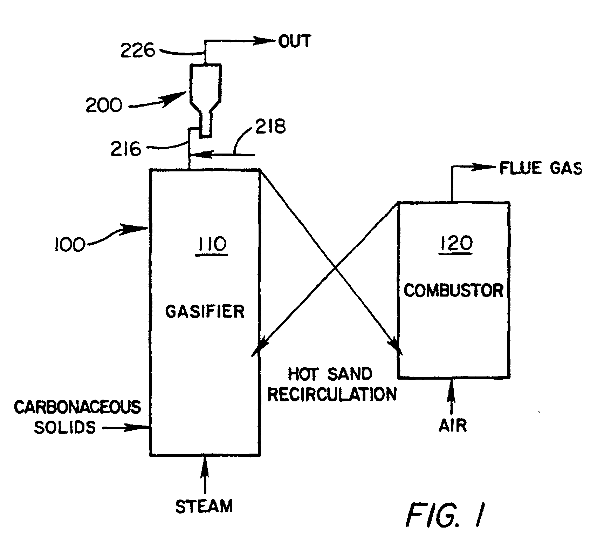

One aspect of the invention involves hot-gas conditioning of synthetic gas produced from an indirectly fired gasification process. This process utilizes a circulating stream of hot sand as an indirect heat transfer agent to perform the gasification reactions. Almost any carbonaceous feedstock to the gasifier is useful with the present invention. Typical examples of useful feedstocks include coal, lignite, peat, municipal waste, wood, energy plantation crops, agricultural and forestry residues, and the like. When biomass feedstocks are used, the inherently high reactivity of the biomass feedstocks allows such an indirect heating method to be readily adapted for gasification in a short residence time reactor system such as a circulating fluid bed. A medium-Btu gas, that is useful for chemical synthesis, is produced; however, the method herein applies to all manner of feedstocks and gasifiers. The reaction chamber used for the present invention can be installed directly after the output of the gasifier as shown in Figure 1.

Another aspect of the invention is the use of hot-gas conditioning as a means of producing an enhanced synthesis gas for subsequent chemical production. In gasification. the carbonaceous feedstock is converted into a mixture of gases that can later be used as a clean, gaseous fuel for heating, power generation. or as a feedstock for chemical synthesis. Chemical synthesis generally requires the use of a medium Btu (non-nitrogen diluted) gas with minimal contaminants for optimum conversion to chemicals. Medium-Btu gas containing primarily CO and $H_2$ can be generated using oxygen as the gasifying medium in a single-vessel gasification process, but the costs of pure oxygen are high. Alternatively, the gas can be generated by heating the biomass materials indirectly with a circulating heat carrier. The resulting gas is nitrogen free, as in the oxygen blown case, and can contain some level of hydrocarbons in addition to the CO and $H_2$. For medium-Btu gases to be used for chemical synthesis, the gas composition is modified to provide the proper ratio of the synthesis gas constituents hydrogen and carbon monoxide, and to reduce hydrocarbon species that can reduce the effectiveness of conversion catalysts. One common chemical product from such synthesis reactions is methanol. Methanol shows considerable promise as an alternative transportation fuel. The production of methanol from medium-Btu gas is technically feasible using current processing methods, however, the cost is not competitive with conventional fuels. One major area in which cost reductions can be realized is in the preparation of the medium-Btu gas prior to methanol synthesis. Such preparation includes hydrocarbon (tar) destruction, methane reforming, and water-gas shift reactions. To achieve optimum overall process efficiencies, these reactions should take place as hot-gas conditioning operations integrated with the gasifier. Preferably, a gas conditioning catalyst that is employed can destroy or minimize hydrocarbons in the gas and shift the $H_2$ to CO ratio of the gas to 2:1 or higher. The method described herein provides this function.

A fluidized bed gasifier system 100 having the arrangement of Figure 1 was utilized as the source of a stable supply of synthesis gas. These gasifiers art well known in the art, see U.S. patent 4,828,581. A gasifier 110 is heated by sand, or other material (including the catalyst discussed herein), circulated between the gasifier 110 and a combustor 120. Output synthesis gas from the gasifier 110 flows to fluidized bed reaction chamber 200 by input line 216. The synthesis gas contained all of the trace constituents that might be present in a commercial scale gasification system.

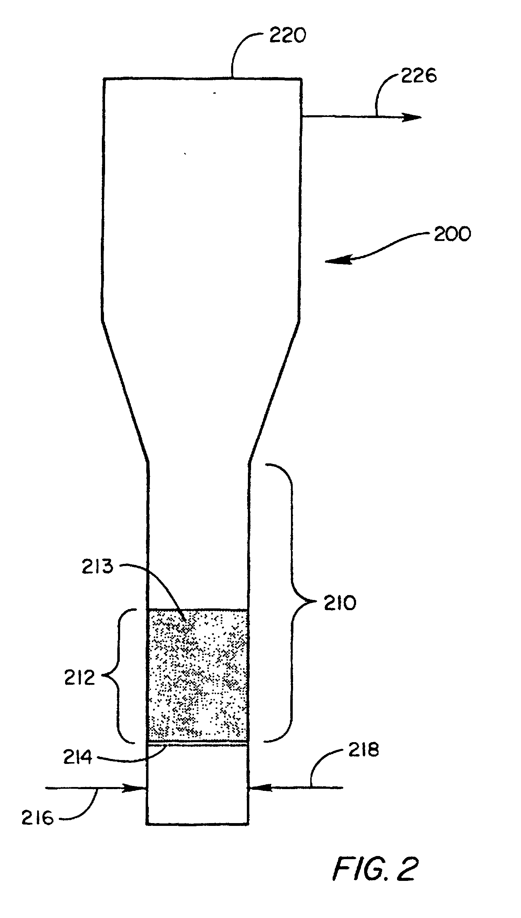

A fluidized bed reaction chamber 200, shown in detail in Figure 2, was installed at the output of a typical fluidized bed gasifier system 100. The catalyst reaction zone 210 was 15.24 cm (6 inches) in diameter and utilized a catalyst bed 212 having a depth of 25.4 cm (10 inches). A 25.4 cm (10 inches) diameter disengaging zone 220 was provided directly above the catalyst reaction zone 210 to minimize entrainment of catalyst particles 213. Gas entered from inlet 216 and exited at outlet 226.

A perforated plate 214 was used to uniformly distribute the synthesis gas. Means for adding additional steam 218 to the synthesis gas with the feed at the input to the reaction chamber was made so that higher water vapor to carbon levels than those present in the entering gas could be achieved.

The gaseous hourly space velocity (GHSV) chosen for the test reactions was about 2000 $m^3/m^3 \cdot hr$. Gas inlet lines for inlet 216 were installed to reflect this nominal design flow rate. Typically, gaseous hourly space velocities of greater than about 1000 $m^3/m^3 \cdot hr$ are preferred. An upper limit for gaseous hourly space velocities of about 5000 $m^3/m^3 \cdot hr$ is preferred. Most preferred are gaseous hourly space velocities of about 1000 $m^3/m^3 \cdot hr$ to about 3000 $m^3/m^3 \cdot hr$.

Temperatures of about 530°C to about 980°C are useful in the method herein, although temperatures between about 650°C to about 870°C are preferred. The water vapor or steam concentration may be up to 80 vol%. Pressures between 1 atmosphere and about 40 atmospheres are satisfactory for the reaction.

A second identical chamber (not shown) connected in parallel with the first reaction chamber 100 was added for comparison tests in Examples H17 through S26 so that two catalyst samples could be directly compared.

Two materials were tested during the hot-gas conditioning tests. A first catalyst material, designated DN34, is a pure alumina (99.9% pure) available from Johnson-Matthey, Bradford, MA, U.S.A. was used for the baseline tests. This material, was ground to a 12x40 mesh size so it could be fluidized in the catalyst chamber 200. The DN34 alumina is a low cost material and is disposable without hazardous designations as is the case with other catalyst systems such as those containing nickel.

The second of these was a nickel based cracking catalyst from ICI, Katalco. Two Transcam Plaza Drive, Oak Brook Terrace. IL. 60181 and was designated ICI-46-1. The catalyst was an extruded material made by coprecipitation, the resulting clay-like material was then extruded and fired. The ICI-46-1 catalyst used for these tests was crushed and screened to provide a suitable material for fluidized bed testing. No change in the metal loading of the catalyst was evident as a result of the grinding operation. A particle size range of 16x40 mesh was chosen for the ICI-46-1 catalyst. There is no practical difference in performance between the 16x40 and 12x40 mesh sizes. The results of the tests with both of these catalyst materials follows.

The initial tests (Tests H10 to H18) with the catalyst, DN34 were designed to develop a baseline performance level with this catalyst material. During these tests no additional steam was added to the incoming synthesis gas over that present at the exit of the gasifier. The synthesis gas fed to the catalyst chamber was taken from the fluidized bed gasifier outlet line where the gas has not been cooled and was fed through a heat traced line to maintain its temperature at approximately 590°C to 650°C. This slip stream was small in relation to the total synthesis gas stream and so a stable flow of gas could be provided to the reaction chamber 200 regardless of slight changes in synthesis gas production rates in the gasifier 110.

In the examples below, Example numbers beginning with "H" indicate a hybrid poplar feed to the gasifier, while "S" indicates a switch grass feed. To generate data on catalyst life the same catalyst bed was used for all of the tests run with hybrid poplar (Examples H10 through H18). The catalyst was heated and cooled in a nitrogen atmosphere and not exposed to air unless it was at room temperature. No pre-reduction step was utilized for any of the tests with DN34. During these tests, approximately 50 hours of total operation were achieved. Example H17 further verified the stability of DN34 through operation over an 8 hour testing period

The DN34 catalyst showed a high level of tar destruction as well as a high level of water gas shift activity during the tests run. $C_2$ + hydrocarbons were essentially eliminated from the incoming synthesis gas during all tests except those run at low temperature 650°C. Water gas shift reactivity remained high throughout the tests with the catalyst.

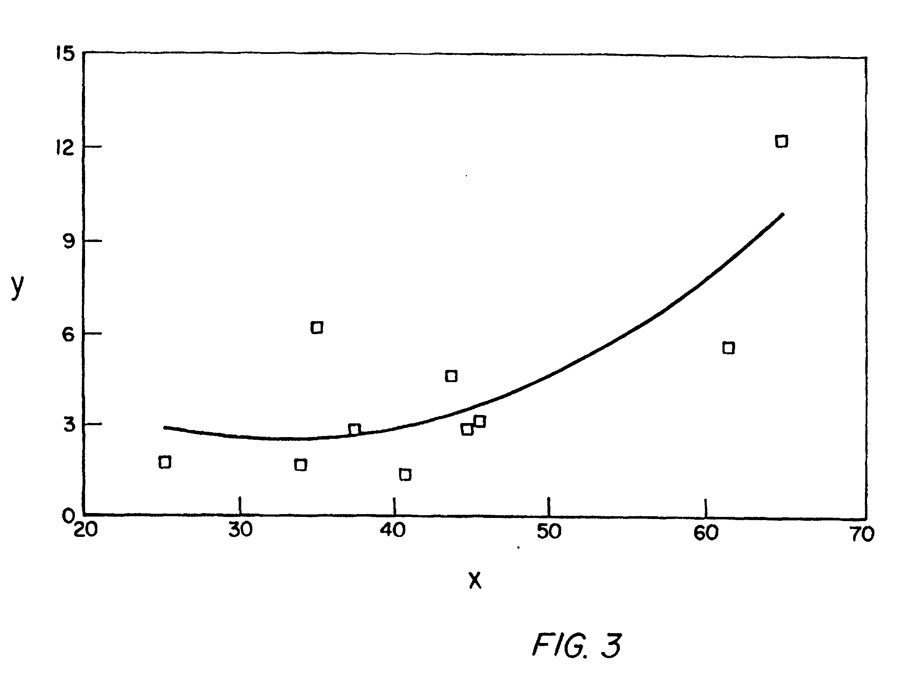

The reaction results with the DN34 catalyst are shown in Table I below Comparing these results with the water concentrations in the synthesis gas, shown in Table IV below, shows that at higher steam concentrations in the synthesis gas, a higher $H_2$ to CO ratio can be realized at the outlet of the catalyst chamber. Examples H14 and H15 represent the low steam concentration tests (25 to 30 percent) while Example H16 represents a high steam concentration test (47 percent). These results are summarized in Table II and are shown graphically in Figure 3. Figure 3 is plotted to show the $H_2$/CO ratio in the Y-axis versus the inlet steam concentration in volume percent in the X-axis. As shown, at higher inlet steam concentrations, higher levels of shift can be achieved, assuming sufficient CO is present for reaction. This verifies the use of DN34 and therefore alumina as a shift catalyst.

These target values were used as a guideline in establishing test conditions for the fluidized bed gasifier 110 for Examples S22 through S26. In general, these conditions were achieved with the exception of the high steam level which was 60 to 65 percent during the tests. Higher temperatures coupled with higher steam rates and lower space velocities resulted in higher conversion levels. Example S22-2, run with high temperature 820°C, high steam content (64.9 percent), and low space velocity (1500 $m^3/m^3 \cdot hr$) showed that over 80 percent of the available CO was shifted to $H_2$ and 40 percent of the methane in the incoming synthesis gas was destroyed. No degradation of the catalyst was evident during the test or in subsequent tests at this temperature. Commercial cracking catalysts tend to lose activity at temperatures above about 760°C. Higher temperatures, higher steam content, and lower space velocities in general provide higher levels of activity while lower temperatures, steam levels, and higher space velocities tend to decrease reaction.

In Example H18-1 there was no catalyst present in one of the parallel chambers to confirm that the catalysts were indeed the source of the activity and not the piping or the stainless steel reactor walls. As shown in Table I. the inlet and outlet gas compositions were essentially the same verifying the catalytic effect of the DN34 catalyst.

Table I. Catalyst Testing Results Gas Chromatograph Data (vol%)

| Gas Content | Example H12 | | Example H14 | | Example H15 | | Example H16 | | Example H17 | | | Example H18 | | |
|---|---|---|---|---|---|---|---|---|---|---|---|---|---|---|
| | | | | | | | | | | 1 | 2 | | 1 | 2 |
| | IN | DN34 OUT | IN | DN34 OUT | IN | DN34 OUT | IN | DN34 OUT | IN | DN34 OUT | ICI-46-1 OUT | IN | EMPTY | ICI-46-1 OUT |
| $H_2$ | 26.8 | 39.5 | 25.7 | 41.3 | 26.2 | 36.7 | 27.3 | 38.2 | 24.5 | 43.1 | 49.2 | 26.1 | 27.1 | 43.4 |
| $CO_2$ | 14.8 | 48.3 | 15.1 | 20.5 | 15.1 | 25.4 | 15.4 | 33.9 | 15.4 | 27.6 | 7.08 | 15.2 | 19.7 | 14.5 |
| $C_2H_4$ | 5.17 | 0.00 | 5.21 | 1.50 | 4.79 | 1.68 | 5.28 | 0.19 | 5.22 | 0.00 | 0.00 | 4.71 | 4.21 | 2.29 |
| $C_2H_6$ | 0.31 | 0.00 | 0.40 | 0.23 | 0.39 | 0.54 | 0.48 | 0.20 | 0.43 | 0.23 | 0.00 | 0.36 | 0.32 | 0.00 |
| $C_2H_2$ | 0.73 | 0.00 | 0.61 | 0.00 | 0.50 | 0.00 | 0.87 | 0.00 | 0.56 | 0.00 | 0.00 | 0.48 | 0.00 | 0.00 |
| $CH_4$ | 14.3 | 5.80 | 14.6 | 11.0 | 14.9 | 14.5 | 14.4 | 13.9 | 15.4 | 13.6 | 0.53 | 14.9 | 14.0 | 6.64 |
| CO | 38.0 | 6.41 | 38.4 | 25.5 | 38.2 | 21.1 | 36.2 | 13.6 | 38.4 | 15.4 | 42.8 | 38.3 | 34.5 | 33.1 |

EP 0 883 569 B1

TABLE II. SUMMARY OF WATER GAS SHIFT DATA--DN34 CATALYST

| Example No. | Catalyst | Inlet $H_2O$, vol% | Inlet $H_2/CO$ Ratio | Outlet $H_2/CO$ Ratio | GHSV* | Catalyst Temp. °C |
|---|---|---|---|---|---|---|
| H12 | DN34 | 35.0 | 0.70 | 6.17 | 2590 | 760 |
| H14 | DN34 | 34.0 | 0.67 | 1.62 | 1640 | 760 |
| H15 | DN34 | 25.3 | 0.69 | 1.74 | 2090 | 760 |
| H16 | DN34 | 44.7 | 0.75 | 2.83 | 2240 | 760 |
| H17-1 | DN34 | 37.4 | 0.64 | 2.80 | 2760 | 760 |
| H18-2 | ICI-46-1 | 40.6 | 0.73 | 1.31 | 2700 | 760 |
| S22-1 | DN34 | 38.9 | 0.55 | 1.08 | 2460 | 650 |
| S22-2 | DN34 | 64.9 | 0.55 | 12.25 | 1650 | 820 |
| S23-1 | DN34 | 65.5 | 0.59 | 0.65 | 1480 | 650 |
| S23-2 | DN34 | 43.7 | 0.59 | 4.54 | 2420 | 820 |
| S24-1 | DN34 | 45.6 | 0.66 | 4.38 | 1530 | 650 |
| S24-2 | DN34 | 61.5 | 0.66 | 5.54 | 2530 | 820 |
| S25 | DN34 | 56.0 | 0.64 | 0.67 | 2500 | 650 |
| S26-1 | DN34 | 61.4 | .0.59 | 1.25 | 2510 | 650 |
| S26-2 | DN34 | 45.5 | 0.59 | 3.06 | 1520 | 820 |

* GHSV - gaseous hourly space velocity, $m^3/m^3 \cdot hr$

EP 0 883 569 B1

TABLE III. GAS CHROMATOGRAPH RESULTS - DN34 CATALYST TESTING
SWITCH GRASS FEEDSTOCK

| DRY GAS % | Example S22 | OUT-1 | OUT-2 | Example S23 | OUT-1 | OUT-2 |
|---|---|---|---|---|---|---|
| | INLET | Reactor Condition 650°C 2500 GHSV* 38.9 vol% $H_2O$ | Reactor Condition 820°C 1500 GHSV 64.9 vol% $H_2O$ | INLET | Reactor Condition 820°C 2500 GHSV 43.7 vol% $H_2O$ | Reactor Condition 650°C 1500 GHSV 65.5 vol% $H_2O$ |
| $H_2$ | 17.43 | 24.09 | 46.67 | 16.74 | 38.69 | 16.73 |
| $CO_2$ | 10.75 | 15.46 | 27.18 | 11.79 | 24.13 | 11.96 |
| $C_2H_4$ | 4.20 | 3.43 | 0.33 | 3.90 | 1.34 | 3.64 |
| $C_2H_6$ | 0.24 | 0.32 | 0.00 | 0.31 | 0.27 | 0.25 |
| $C_2H_2$ | 0.56 | 0.00 | 0.00 | 0.41 | 0.00 | 0.39 |
| $N_2$ | 24.47 | 24.52 | 15.89 | 28.67 | 19.28 | 32.13 |
| $CH_4$ | 10.67 | 9.94 | 6.12 | 9.77 | 7.77 | 9.13 |
| CO | 31.68 | 22.24 | 3.81 | 28.41 | 8.52 | 25.77 |

* GHSV - gaseous hourly space velocity, $m^3/m^3 \cdot hr$

EP 0 883 569 B1

TABLE III (CONTINUED). GAS CHROMATOGRAPH RESULTS – DN34 CATALYST TESTING SWITCH GRASS FEEDSTOCK

| DRY GAS % | Example S24 | | | Example S25 | | Example S26 | | |
|---|---|---|---|---|---|---|---|---|
| | INLET | OUT-1 Reactor Condition 650°C 1500 GHSV 45.6 vol% $H_2O$ | OUT-2 Reactor Condition 820°C 2500 GHSV 61.5 vol% $H_2O$ | INLET | OUT Reactor Condition 650°C 2500 GHSV 56 vol% $H_2O$ | INLET | OUT-1 Reactor Condition 820°C 1500 GHSV 45.5 vol% $H_2O$ | OUT-2 Reactor Condition 650°C 2500 GHSV 61.4 vol% $H_2O$ |
| $H_2$ | 18.23 | 33.01 | 35.86 | 18.40 | 15.33 | 16.77 | 34.74 | 23.85 |
| $CO_2$ | 11.74 | 24.14 | 24.84 | 11.66 | 13.37 | 11.26 | 22.60 | 17.32 |
| $C_2H_4$ | 3.67 | 2.07 | 1.68 | 3.68 | 3.08 | 3.66 | 1.52 | 3.30 |
| $C_2H_6$ | 0.21 | 0.39 | 0.2 | 0.20 | 0.11 | 0.17 | 0.21 | 0.17 |
| $C_2H_2$ | 0.39 | 0.00 | 0.00 | 0.38 | 0.13 | 0.45 | 0.00 | 0.00 |
| $N_2$ | 28.22 | 24.05 | 22.76 | 26.98 | 36.45 | 29.66 | 20.98 | 26.91 |
| $CH_4$ | 9.78 | 8.81 | 8.20 | 10.14 | 8.54 | 9.85 | 8.62 | 9.41 |
| $CO$ | 27.75 | 7.53 | 6.47 | 28.55 | 22.99 | 28.19 | 11.34 | 19.04 |

* GHSV - gaseous hourly space velocity, $m^3/m^3 \cdot hr$

A nickel-based commercial cracking catalyst was acquired from ICI-Katalco. The manufacturer's designation for this catalyst is ICI-46-1. The catalyst is a supported nickel oxide catalyst that has been promoted with potash to prevent the formation and accumulation of carbon during steam reforming reactions. The catalyst is shipped as rashig

9

rings. These rings were crushed to provide the appropriate particle size for fluidized bed operation. The manufacturer's startup and conditioning procedures were followed. The startup procedure reduces the nickel oxide to nickel metal and removes sulfur from the surface of the catalyst. This is necessary since the catalyst is shipped in the sulfided state to protect the active metal from contamination.

Examples with the ICI-46-1 catalyst in place were run during fluidized bed gasifier Examples H17-2 and H18-1. The catalyst showed a significant reduction in activity from Example H17-2 to Example H18-1 as evidenced by the methane concentration in the outgoing synthesis gas. Table I shows that the methane concentration at the exit of the catalyst chamber rose from 0.53 percent to 6.64 percent in Examples H17-2 and H18-1, respectively. Steam concentrations and catalyst bed temperatures were approximately the same for both of these tests. A somewhat higher space velocity was utilized during Example H17-2 (2666 versus 2530 in Example H18-1) which further confirms the loss in activity. Temperatures during the tests with ICI-46-1 were within the recommended operating temperature range suggested by the manufacturer, who lists temperatures up to 1000°C when used in combination with other catalysts as would be the case in a methanol system or 850°C when used alone. Steam concentrations in the incoming synthesis gas were likewise within the recommended range for this catalyst. The reduction in activity, therefore, was not caused by any external variables, but rather was a characteristic levelling off of activity during the initial hours of operation of the catalyst

The ICI-46-1 catalyst is a highly specific cracking catalyst. As such, it exhibited very little water gas shift activity as shown by the CO concentrations at the exit of the catalyst chamber. To provide the proper $H_2$ to CO ratio using ICI-46-1 as a hot-gas conditioning catalyst will require a second water-gas shift catalyst chamber separate from a first reaction chamber to accomplish the water gas shift. Such a second chamber will increase the capital and operating costs of commercial scale methanol production.

The ICI-46-1 catalyst is specifically designed to be effective in cracking hydrocarbons with boiling points up to 220°C. The tests run in the fluidized bed gasifier verified this design criteria. The reduction in tar concentration from the incoming synthesis gas was less than that evident with the DN34 catalyst as shown in Table IV below.

For example, the hydrogen:carbon monoxide ration in the synthesis gas was raised from 0.7:1 to over 2.0:1 and tar content of the synthesis gas was reduced an order of magnitude or more by use of the DN34 catalyst.

The concentration of higher hydrocarbons such as tar (condensable species) in the synthesis gas fed to the reaction chamber 200 and the concentration of condensables in the outlet 226 from the reaction chamber 200 was determined. The results of these sample collections are provided in Table IV. As shown, in each case, a significant reduction of the condensable material in the outlet gas stream was evident as a result of passing through the catalyst chamber 200. In all cases, the tar concentration was reduced by an order of magnitude or more regardless of the catalyst used.

Inlet tar concentration depended in most cases on the type of feed material being gasified. For example, the tars produced from switch grass (Examples S21 and S26) were less than 50 percent of those produced with the hybrid poplar (Examples H10 to H18). Tar production from hybrid poplar was about 0.016 kg/m$^3$ or approximately 1 percent of the dry weight of wood fed to the gasifier 110. The switch grass production rate was about 0.0080 kg/m$^3$ or approximately 0.5 percent of the dry feed rate.

Table IV.  Tar Collection Results
Hybrid Poplar Feed to Gasifier

| Example No. | Catalyst in Reactor | Tar Measured at | Water | Water | Total Tar |
|---|---|---|---|---|---|
| | | | kg/m$^3$ | vol. % | kg/m$^3$ |
| H10 | DN34 | INPUT | 0.546 | 40.5 | 0.0216 |
| | | OUTPUT | 0.735 | 47.8 | 0.00001 |
| H11 | DN34 | INPUT | 0.668 | 45.4 | 0.0199 |
| | | OUTPUT | 0.051 | 5.97 | 0.00000 |
| H13 | DN34 | INPUT | 0.553 | 40.7 | 0.0210 |
| | | OUTPUT | 0.050 | 5.83 | 0.0002 |
| H14 | DN34 | INPUT | 0.276 | 22.6 | 0.0261 |
| | | OUTPUT | 0.243 | 23.3 | 0.0006 |
| H15 | DN34 | INPUT | 0.272 | 25.3 | 0.0171 |
| | | OUTPUT | 0.248 | 23.7 | 0.0027 |
| H16 | DN34 | INPUT | 0.654 | 44.7 | 0.0176 |
| | | OUTPUT | 0.136 | 14.5 | 0.00000 |
| H17 | | INPUT | 0.497 | 37.5 | 0.0370 |
| | DN34 | OUTPUT-1 | 0.207 | 20.4 | 0.0005 |
| | ICI-46-1 | OUTPUT-2 | 0.053 | 6.11 | 0.0036 |
| H18 | | INPUT | 0.545 | 40.7 | 0.0089 |
| | EMPTY | OUTPUT-1 | 0.259 | 24.5 | 0.0014 |
| | ICI-46-1 | OUTPUT-2 | 0.104 | 11.5 | 0.0002 |

### Table IV (Continued). Tar Collection Results
### Hybrid Poplar Feed to Gasifier

| Example No. | Catalyst in Reactor | Tar Measured at | Water kg/m$^3$ | Water vol. % | Total Tar kg/m$^3$ |
|---|---|---|---|---|---|
| S21 | DN34 | INPUT | 0.616 | 43.3 | 0.0081 |
|  |  | OUTPUT-1 | 0.000 | 0.000 | 0.00000 |
|  |  | OUTPUT-2 | 0.251 | 23.9 | 0.00000 |
| S22 | DN34 | INPUT | 0.511 | 38.8 | 0.0068 |
|  |  | OUTPUT-2 | 2.139 | 72.6 | 0.00000 |
| S23 | DN34 | INPUT | 0.623 | 43.6 | 0.0051 |
|  |  | OUTPUT-1 | 0.852 | 51.5 | 0.00000 |
|  |  | OUTPUT-2 | 2.435 | 75.2 | 0.0007 |
| S24 | DN34 | INPUT | 0.674 | 45.6 | 0.0089 |
|  |  | OUTPUT-1 | 0.466 | 36.7 | 0.00000 |
|  |  | OUTPUT-2 | 2.018 | 71.5 | 0.00000 |
| S25 | DN34 | INPUT | 0.503 | 38.5 | 0.0094 |
|  |  | OUTPUT-2 | 0.863 | 51.8 | 0.0050 |
| S26 | DN34 | INPUT | 0.593 | 42.3 | 0.0105 |
|  |  | OUTPUT-1 | 0.565 | 41.3 | 0.0004 |

Six additional examples illustrate the invention further. The first five, Examples W1 to W5, used the reaction chambers 200 as described above. The sixth example, Example W6 (A and B), used the catalyst as a circulating phase in place of sand in the fluidized bed gasifier system 100. Operation with the catalyst as a circulating phase can eliminate the need for a downstream reactor system which will result in reduced capital and operating costs.

Table V summarizes the results of tests W1 through W5. The catalyst chambers previously utilized above were connected essentially as before. The same gaseous hourly space velocity to the catalyst chamber of approximately 2000 m3/m3·hr was also used. The catalyst chamber temperature was controlled at approximately 820°C and no additional steam was added as part of the feed gas.

The operating temperature of the gasifier 110 and catalyst 213 are shown in the table. Catalyst DN34 as above was used as well as catalyst DN40 (a similar material made by Girdler, a catalyst manufacturer) and is an alumina support material with no impregnation. Catalyst DN 50 is a fused alumina from Norton (a refractory supplier) and provides a measurement of the effect of internal surface area on the catalyst activity. Conventional wisdom would indicate that a reduction in internal surface would result in no catalytic activity of the material.

As an indication of the effectiveness of the catalyst formulations as cracking catalysts, the conversion of ethane ($C_2H_6$) was monitored. During earlier examples discussed above (H series and S series), ethane conversion was round to, in most cases, parallel the conversion of the tar constituents in the gas. Detailed measurements of tar conversion were not made in the following examples, however, visual observation of the gas chromatograph sample lines indicated that tar was greatly reduced when compared with the raw synthesis gas from the gasifier 110.

Another significant measure of the catalysts activity is the water gas shift activity. These tests showed activity ranging from 22 to 77%. The fused material gave the lowest activity and the DN34 material. the highest. Even 22% activity is significant and can potentially be improved by use of alternate test conditions.

## Table V. Alumina Catalyst Example W1 Through W5 Data

| Example | W1 IN | W1 OUT | W2 IN | W2 OUT | W3 IN | W3 OUT |
|---|---|---|---|---|---|---|
| Catalyst Number | DN34 | | DN34 | | DN40 | |
| Gasifier Temp. °C | 836 | 831 | 838 | 841 | 828 | 821 |
| Catalyst Temp. °C | | 794 | | 801 | | 786 |
| NITROGEN FREE GAS ANALYSIS (vol%) | | | | | | |
| $H_2$ | 25.4 | 48.2 | 20.3 | 47.9 | 20.5 | 39.4 |
| $CO_2$ | 12.4 | 29.5 | 11.8 | 28.2 | 9.2 | 15.8 |
| $C_2H_4$ | 5.2 | 2.1 | 5.8 | 1.3 | 6.0 | 2.1 |
| $C_2H_6$ | 0.4 | 0.2 | 0.5 | 0.2 | 0.5 | 0.3 |
| $C_2H_2$ | 0.8 | 0.0 | 0.8 | 0.0 | 0.8 | 0.0 |
| $CH_4$ | 13.2 | 10.3 | 14.6 | 11.2 | 14.1 | 11.8 |
| CO | 42.7 | 9.7 | 46.2 | 11.1 | 48.8 | 30.6 |
| GAS CONVERSIONS (vol%) | | | | | | |
| CO Conversion | | 77 | | 75 | | 37 |
| $C_2H_6$ Conversion | | 32 | | 58 | | 37 |

### Table V (Continued). Alumina Catalyst
### Example W1 Through W5 Data

| Example | W4 IN | W4 OUT | W5 IN | W5 OUT |
|---|---|---|---|---|
| Catalyst Number | DN40 | | DN50 | |
| Gasifier Temp. °C | 843 | 849 | 806 | 808 |
| Catalyst Temp. °C | | 822 | | 764 |
| NITROGEN FREE GAS ANALYSIS (vol%) | | | | |
| $H_2$ | 28.0 | 40.1 | 20.0 | 28.0 |
| $CO_2$ | 12.0 | 17.3 | 9.4 | 13.0 |
| $C_2H_4$ | 4.6 | 2.5 | 5.9 | 4.8 |
| $C_2H_6$ | 0.3 | 0.0 | 0.6 | 0.2 |
| $C_2H_2$ | 0.6 | 0.0 | 0.6 | 0.3 |
| $CH_4$ | 13.7 | 11.3 | 13.8 | 13.6 |
| CO | 40.8 | 28.8 | 51.8 | 40.2 |
| GAS CONVERSIONS (vol%) | | | | |
| CO Conversion | | 30 | | 22 |
| $C_2H_6$ Conversion | | 100 | | 67.2 |

Another embodiment of the invention involves the use of the alumina catalyst as a recirculating phase. By this method hot-gas conditioning can be greatly simplified and economics can be improved by the possible elimination of the hot-gas conditioning unit operation. The alumina should be ground or granulated so as to act in the same manner as the heat transfer agent that it partially or completely replaces. The granulated alumina will preferably be of a size and density to provide a balance between catalytic characteristics, heat transfer characteristics, and flowability.

Gasifier 110 conditions were controlled at approximately 820°C and steam input of approximately 1 kg per kg of feedstock (wood) fed to maximize the water vapor in the synthesis gas. Operation in this mode allowed the reactor chamber 200 operation to be made without the addition of steam to the incoming synthesis gas. In the examples herein it was noted that the ground alumina used did not flow as well as the sand that it replaced, thus the particles are preferably free flowing particles having flow characteristics adapted to recirculating systems, i.e. similar to or better than sand.

Table VI shows examples using DN34 as a circulating bed material. Here, as in the previous tests, definite water gas shift activity is noticed as well as conversion of ethane. Two different temperature levels were possible in these tests and the gas compositions are compared with those obtained during previous tests without the catalyst circulating phase to establish the activity levels. Even at the lower temperature in Example W6-B a significant increase in hydrogen is noticed, illustrating significant shift activity.

Table VI.

| Catalyst Example W6 Data Use of DN 34 as a Circulating Phase | | | | |
|---|---|---|---|---|
| Example | W3 | W6-A | W5 | W6-B |
| Catalyst Number | DN 34 | | DN 34 | |
| Gasifier Temp. °C | 828 | 835 | 806 | 808 |
| Catalyst Temp. °C | | 835 | | 808 |
| NITROGEN FREE GAS ANALYSIS (vol%) | | | | |
| $H_2$ | 20.5 | 36.2 | 20.0 | 36.5 |
| $CO_2$ | 9.2 | 20.5 | 9.4 | 20.7 |
| $C_2H_4$ | 6.0 | 4.0 | 5.9 | 3.9 |
| $C_2H_6$ | 0.5 | 0.4 | 0.6 | 0.4 |
| $C_2H_2$ | 0.8 | 0.0 | 0.6 | 0.0 |
| $CH_4$ | 14.1 | 12.4 | 13.8 | 12.1 |
| CO | 48.8 | 26.6 | 51.8 | 26.4 |
| GAS CONVERSIONS (vol%) BASED ON PRIOR TEST OUTPUT GAS | | | | |
| CO Conversion | | 45.6 | | 49 |
| $C_2H_6$ Conversion | | 27 | | 36 |
| | | | | |

A further benefit of hot-gas conditioning, when applied to advanced power generation cycles such as those including fuel cells, is that the hydrogen content of the gas can be increase. Fuel cell applications require high hydrogen content fuel gases. By using catalyst DN34, the hydrogen content of the product gas can be raised to a level so that no further water gas shift reaction is necessary in the fuel cell system. The product gas leaving most biomass gasifiers, including the herein descried gasifier, has a hydrogen to carbon monoxide ratio much less than 2:1 and in some cases less than 1:1. The ratio can be adjusted by the water gas shift reaction shown in the equation above. This reaction requires the presence of a catalyst to enhance the reaction rates. Catalyst DN34 is effective in enhancing the water gas shift reaction to produce a gas with a high hydrogen to carbon monoxide ratio as further illustrated in Table VII below. With a hydrogen content in excess of 60% no further conversion of carbon monoxide to hydrogen would be necessary for fuel cell applications.

Catalyst temperature was elevated above the gasifier temperature by 50°C during the tests for the date of Table VII to enhance the water gas shift reactions.

Table VII.

| **Water Gas Shift Results With Catalyst DN34** | | |
|---|---|---|
| Gas Component | Input Gas from Gasifier % dry basis | Output Gas from Catalyst % dry basis |
| $H_2$ | 24.62 | 60.45 |
| $CO_2$ | 18.24 | 31.84 |
| $C_2H_2$ | 0.56 | ND* |
| $C_2H_4$ | 4.61 | ND |
| $C_2H_6$ | 0.46 | ND |
| $N_2$ | 8.40 | 3.36 |

Table VII.   (continued)

| Water Gas Shift Results With Catalyst DN34 | | |
|---|---|---|
| Gas Component | Input Gas from Gasifier % dry basis | Output Gas from Catalyst % dry basis |
| $CH_4$ | 10.46 | 2.46 |
| CO | 32.64 | 1.89 |
| ND - None detectable. | | |

The invention has been tested under actual biomass gasification conditions in two separate reactor systems. These systems were, a 6 inch (15.24 cm) diameter slip stream reactor and a 36 inch (91.44 cm) diameter "full flow" reactor designed to process the complete output from a high throughput gasifier. Both reactors were operated as fluidized beds with superficial velocities of 30.5 cm/sec. Gaseous hourly space velocities expressed as $m^3_{gas}$ /$m^3_{catalyst}$·hr (at operating conditions), were controlled between 1500 $m^3/m^3$·hr and 2500 $m^3/m^3$·hr for the experiments of Tables VII and VIII.

During the tests, tar concentration in the product gas was measured by sampling using a modified method 5 (MM5) train. The MM5 train consist of a series of five impingers placed in an ice bath followed by a dry gas meter to measure the quantity of gas sampled. After sampling, the impringers were rinsed with toluene to remove tars and water collected. Toluene and water were removed from the samples by heating in an oven at 65°C overnight. Tar concentration at the inlet and outlet of the catalyst bed was then compared to determine tar destruction efficiencies.

Table VIII below shows the significant improvement in the quality of the gas that can be realized. The data for Table VIII were generated using the catalyst in both the smaller slip stream reactor and the full flow catalyst reactor.

Table VIII.

| Comparison of Hot Gas Conditioning for Both the Slip Stream and Full Flow Reactors | | | |
|---|---|---|---|
| Gasifier Temp. °C | Tar Prod. $kg/m^3$ | Catalyst Unit | Catalyst Outlet $kg/m^3$ |
| 800 | $2.3x10^{-2}$ | (91.44 cm) 36" full flow | $1.4x10^{-3}$ |
| 815 | $1.9x10^{-2}$ | (15.24 cm) 6" slip stream | $1.4x10^{-3}$ |
| 815* | $1.2x10^{-2}$ | (15.24 cm) 6" slip stream | $3.6x10^{-3}$ |

\* - greenwood feedstock

With all of the materials tested, alumina continued to show activity as both a cracking and shift catalyst. The alumina provides significant advantages in terms of initial cost and disposal cost because of the elimination of noble metals from the catalyst.

**Claims**

1.   A method for cracking and shifting a synthesis gas comprising:

   a. providing a catalyst consisting essentially of alumina;
   b. contacting said catalyst with said synthesis gas comprising a substantially oxygen free mixture of gases of water vapor and hydrocarbons having one or more carbon atoms, at a temperature between 530°C (1000°F) to 980°C (1800°F); and wherein said hydrocarbons are cracked to form hydrogen, carbon monoxide and/or carbon dioxide and the hydrogen content of said mixture shifted so as to increase with a corresponding decrease in carbon monoxide, and wherein carbon formation is substantially eliminated.

2.   The method of claim 1 wherein said catalyst consists essentially of granulated alumina; and wherein said catalyst is circulated between a gasifier where said contacting is accomplished, and a combustor where said catalyst is heated to maintain said temperatures when said catalyst is recirculated to said gasifier.

3.   The method of claim 1 or 2 wherein said substantially oxygen free mixture of gases further comprises carbon monoxide and/or hydrogen.

4. The method of anyone of claims 1 to 3 further comprising a gaseous hourly space velocity greater than 1000 $m^3/m^3hr$ to 5000 $m^3/m^3hr$.

5. The method of anyone of claims 1 to 4 comprising completing said cracking and shifting reaction in one reaction zone.

6. The method of anyone of claims 1 to 5 wherein said contacting is carried out in a fluidized bed reactor.

7. The method of anyone of claims 1 to 5 wherein said contacting is carried out in a recirculating fluidized bed gasifier.

8. The method of anyone of claims 1 to 5 wherein said contacting is carried out in a fixed bed reactor.

9. The method of anyone of claims 1 to 8 wherein said temperature is between 650°C to 870°C.

10. The method of anyone of claims 1 to 9 wherein the $H_2/CO$ ratio is controlled by adjusting the amount of water vapor.

11. The method of anyone of claims 1 to 10 wherein the $H_2/CO$ ratio is shifted to 2:1 or higher.

12. Use of alumina as a catalyst in a method for cracking and shifting a synthesis gas according to anyone of claims 1 to 11.

**Patentansprüche**

1. Verfahren zum Spalten und Verschieben eines Synthesegases, wobei das Verfahren die folgenden Schritte umfaßt:

   a. es wird ein Katalysator bereitgestellt, der im wesentlichen aus Aluminiumoxid besteht;

   b. der Katalysator wird bei einer Temperatur zwischen 530°C (1000°F) und 980°C (1800°F) mit dem Synthesegas in Kontakt gebracht, das eine im wesentlichen sauerstofffreie Mischung von Gasen aus Wasserdampf und Kohlenwasserstoffen mit einem oder mehr Kohlenstoffatomen umfaßt; wobei die Kohlenwasserstoffe zu Wasserstoff, Kohlenmonoxid und/oder Kohlendioxid gespalten werden und der Wasserstoffgehalt der Mischung so verschoben wird, daß er mit einem entsprechenden Rückgang an Kohlenmonoxid zunimmt, und wobei die Bildung von Kohlenstoff im wesentlichen ausgeschaltet wird.

2. Verfahren nach Anspruch 1, bei dem der Katalysator im wesentlichen aus körnigem Aluminiumoxid besteht; und bei dem man den Katalysator zwischen einer Vergasungsvorrichtung, in der die Kontaktierung erfolgt, und einer Verbrennungsvorrichtung, in der der Katalysator erwärmt wird, zirkulieren läßt, um die Temperaturen aufrechtzuerhalten, wenn der Katalysator zu der Vergasungsvorrichtung zurückgeführt wird.

3. Verfahren nach Anspruch 1 oder 2, bei dem die im wesentlichen sauerstofffreie Mischung von Gasen ferner Kohlenmonoxid und/oder Wasserstoff umfaßt.

4. Verfahren nach einem der Ansprüche 1 bis 3, das ferner eine stündliche Gasbelastung von mehr als 1000 $m^3/m^3h$ bis 5000 $m^3/m^3h$ umfaßt.

5. Verfahren nach einem der Ansprüche 1 bis 4, bei dem die Spalt- und Verschiebungsreaktion in einer Reaktionszone abgeschlossen wird.

6. Verfahren nach einem der Ansprüche 1 bis 5, bei dem die Kontaktierung in einem Wirbelschichtreaktor durchgeführt wird.

7. Verfahren nach einem der Ansprüche 1 bis 5, bei dem die Kontaktierung in einer Wirbelschicht-Vergasungsvorrichtung mit Rückführung durchgeführt wird.

8. Verfahren nach einem der Ansprüche 1 bis 5, bei dem die Kontaktierung in einem Festbettreaktor durchgeführt wird.

**EP 0 883 569 B1**

9. Verfahren nach einem der Ansprüche 1 bis 8, bei dem die Temperatur zwischen 650°C und 870°C liegt.

10. Verfahren nach einem der Ansprüche 1 bis 9, bei dem das Verhältnis $H_2$/CO durch Einstellen der Menge an Wasserdampf gesteuert wird.

11. Verfahren nach einem der Ansprüche 1 bis 10, bei dem das Verhältnis $H_2$/CO auf 2:1 oder höher verschoben wird.

12. Verwendung von Aluminiumoxid als Katalysator bei einem Verfahren zum Spalten und Verschieben eines Synthesegases nach einem der Ansprüche 1 bis 11.


**Revendications**

1. Procédé de craquage et de changement d'un gaz de synthèse, comprenant les étapes suivantes

   a. on fournit un catalyseur constitué essentiellement d'oxyde d'aluminium ;

   b. le catalyseur est mis en contact avec le gaz de synthèse qui comprend un mélange, sensiblement exempt d'oxygène, de gaz de vapeur d'eau et d'hydrocarbures avec un ou plusieurs atomes de carbone, à une température entre 530°C (1000F°) et 980°C (1800F°) ; et les hydrocarbures sont craqués pour former de l'hydrogène, du monoxyde de carbone et/ou du dioxyde de carbone, et la teneur en hydrogène du mélange est changée de manière à s'accroître avec un décroissement correspondant de monoxyde de carbone, et la formation de carbone étant essentiellement éliminée.

2. Procédé selon la revendication 1, dans lequel le catalyseur est constitué essentiellement d'oxyde d'aluminium granulé ; et dans lequel on fait circuler le catalyseur entre un gazéificateur dans lequel a lieu la mise en contact, et un brûleur dans lequel le catalyseur est chauffé, pour maintenir la température lorsque le catalyseur est ramené au gazéificateur.

3. Procédé selon la revendication 1 ou 2, dans lequel le mélange de gaz sensiblement exempt d'oxygène comprend en outre du monoxyde de carbone et/ou de l'hydrogène.

4. Procédé selon l'une des revendications 1 à 3, qui comprend en outre une charge gazeuse par heure de plus de 1000 m$^3$/m$^3$h à 5000 m$^3$/m$^3$h.

5. Procédé selon l'une des revendications 1 à 4, dans lequel la réaction de craquage et la réaction de changement sont achevées dans une zone de réaction.

6. Procédé selon l'une des revendications 1 à 5, dans lequel la mise en contact est effectuée dans un réacteur à lit fluidisé.

7. Procédé selon l'une des revendications 1 à 5, dans lequel la mise en contact est effectuée dans un gazéificateur à lit fluidisé à recirculation.

8. Procédé selon l'une des revendications 1 à 5, dans lequel la mise en contact est effectuée dans un réacteur à lit fixe.

9. Procédé selon l'une des revendications 1 à 8, dans lequel la température se situe entre 650°C et 870°C.

10. Procédé selon l'une des revendications 1 à 9, dans lequel le rapport $H_2$/CO est commandé par réglage de la quantité de vapeur d'eau.

11. Procédé selon l'une des revendications 1 à 10, dans lequel le rapport $H_2$/CO est changé à 2:1 ou plus.

12. Utilisation d'oxyde d'aluminium à titre de catalyseur dans un procédé de craquage et de changement d'un gaz de synthèse selon l'une des revendications 1 à 11.

18

FIG. 1

*FIG. 2*

FIG. 3